# EUROPEAN PATENT SPECIFICATION

(11) **EP 3 208 479 B1**
(45) Date of publication and mention of the grant of the patent: **24.10.2018**
(21) Application number: 17000178.8
(22) Date of filing: 03.02.2017
(51) Int. Cl.: F16D 1/08, F16D 1/06, F16D 13/64, F16D 1/10, F16H 57/12

(54) **VEHICLE DRIVELINE COUPLING**
KUPPLUNG IM ANTRIEBSSTRANG EINES FAHRZEUGS
DISPOSITIF D'ACCOUPLEMENT

(30) Priority: 22.02.2016 GB 201603044
(43) Date of publication of application: 23.08.2017
(73) Proprietor: Raicam Clutch Limited, West Midlands B3 2AS (GB)
(72) Inventor: Cogzell, Rodney, Coventry, West Midlands CV3 5NQ (GB); Homan, Keith, Kidderminster, Worcestershire DY11 5NK (GB); Jayes, Simon, Honeybourne, Worcestershire WR11 7TE (GB); Struve, Benjamin Chetwood, Kenilworth, Warwickshire CV8 2GN (GB)
(74) Representative: Morrall, Roger

(56) References cited:
- US-A- 4 588 062
- US-A- 5 908 100
- US-A1- 2012 079 913

## Description

This invention relates to vehicle driveline couplings for coupling a driveline component to a splined drive shaft.

A generic driveline coupling is known from US-A-5 908 100. Problems arise with such splined connections as the clearances in such connections can give rise to torsional vibrations at engine idle speeds when both sides of the drive shaft splines tend to tap both sides of the hub splines leading to significant idle rattle.

It is an object of the present invention to provide an improved form of vehicle driveline coupling which at least mitigates this rattle problem.

Thus according to the present invention there is provided a vehicle driveline coupling for coupling a drive component to a splined drive shaft, the coupling comprising:-
a primary hub connected for co-rotation with the driveline component and having a first spline connection for engaging splines on the drive shaft;
a secondary hub mounted co-axially with the primary hub and having a second spline connection for engaging the splines on the drive shaft;
spring means for generating a rotational torque bias between the two hubs about their co-axial axis so that the two spline connections are not aligned and cannot initially both be mounted on the drive shaft splines, the coupling being characterised in that setting means are provided acting between the hubs to rotate the hubs relative to each other against the torque bias to increase the bias and align the spline connections to allow both hubs to be mounted on the drive shaft splines, release of the setting means after the hubs are both mounted on the drive shaft splines allowing the spring means to bias the hubs rotationally away from each other so that the first spline connection is in drive transmitting contact with the drive shaft splines and this contact is maintained, thus eliminating spline rattle, unless an overrunning torque in excess of the bias torque is transmitted through the drive shaft.

Such a coupling arrangement, by maintaining drive transmitting contact with the drive shaft splines under normal driving conditions, even during normal overrunning conditions, eliminates spline rattle in the connection between the primary hub and the splines of the drive shaft.

A drive disc rigidly connected with the primary hub may provides the connection between the primary hub and the driveline component. Such an arrangement is particularly suitable for use in a vehicle driveline in which a driveline component in the form of an engine flywheel is connected by the coupling to the drive shaft.

The spring means may comprise circumferentially acting coil springs which act between a central flange connected with one hub and a pair of outer spaced plates connected with the other hub.

The setting means may comprise a bolt in screw-threaded engagement with a component connected with one hub, the bolt engaging a formation connected with the other hub so that rotation of the bolt within the component rotates the one hub relative to the other hub to align the hub spline connections and increase the torque bias.

A plurality of bolts may be provided a circumferentially spaced locations around the hubs. Typically two such bolts are employed.

The rotational torque applied by the spring means exceeds the normal maximum torque expected to be transmitted by the drive shaft.

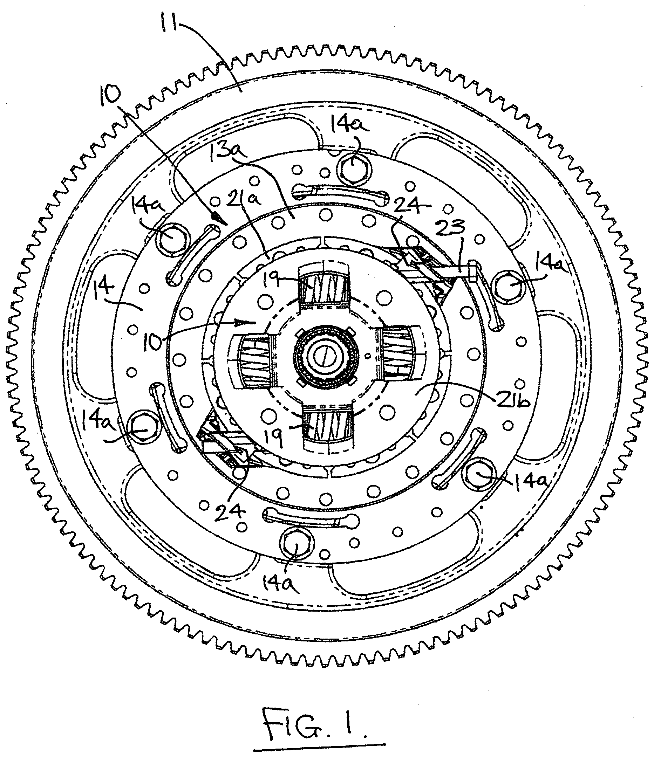

The present invention will now be described, by way of example only with reference to the accompanying drawings in which:-
Figure 1 shows a plan view of a coupling in accordance with the present invention mounted on a vehicle flywheel;
Figure 2 shows a plan view of the coupling of Figure 1 with an outer spring mounting plate removed for clarity and its hib splines not aligned;
Figure 3 shows a plan view of the coupling of Figure 2 with its hub splines aligned for mounting on a drive shaft;
Figure 4 shows a radial section through the hubs of the coupling of Figure 1, and the embodiment of Figure 1 with the clutch engaged after a wear adjustment has occurred;
Figure 5 shows a radial section through the setting bolt arrangement used in the coupling of Figure 1, and

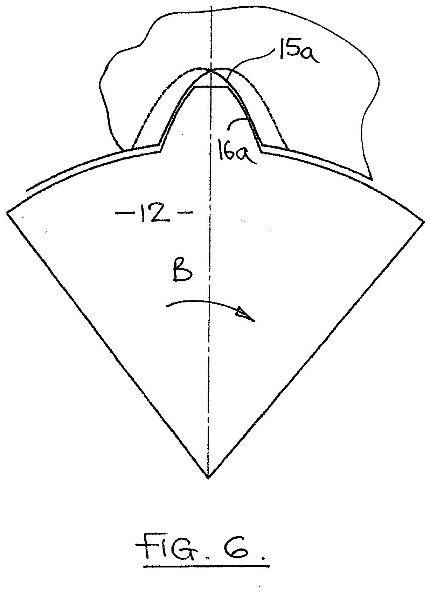

Figure 6 shows enlarged details of the hub and drive shaft spline teeth used in the coupling of Figure 1.

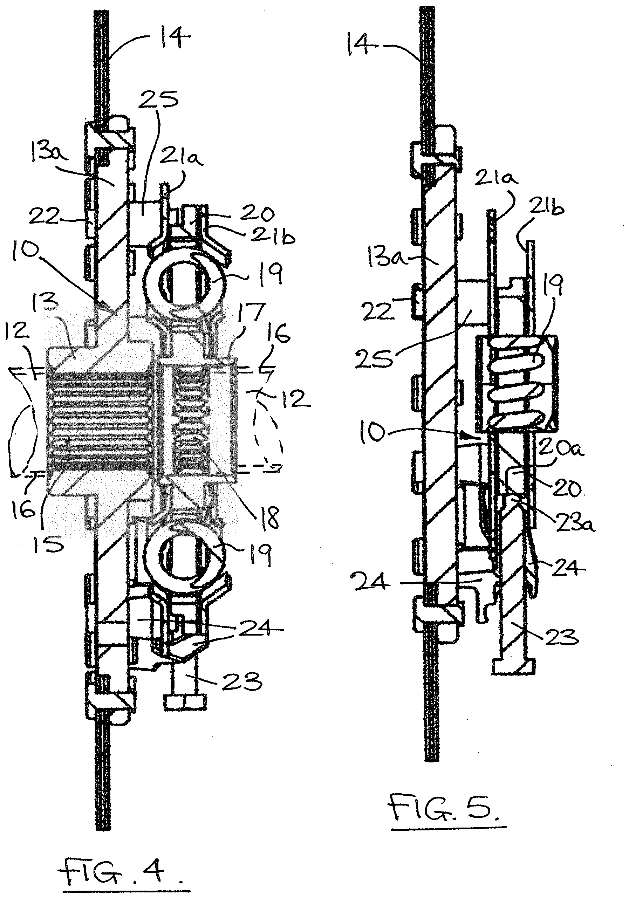

Referring to the drawings, a vehicle driveline coupling 10 for connecting a driveline component in the form of a flywheel 11 to a drive shaft 12 (see Figure 4)has a primary hub 13 with a flange 13a connected for co-rotation with the flywheel by a drive disc 14 and bolts 14a. The primary hub 13 has a first spline connection 15 for engaging splines 16 on the drive shaft 12.

The coupling also has a secondary hub 17 mounted co-axially with the primary hub 13 and having a second spline connection 18 for engaging the splines 16 on the drive shaft 12.

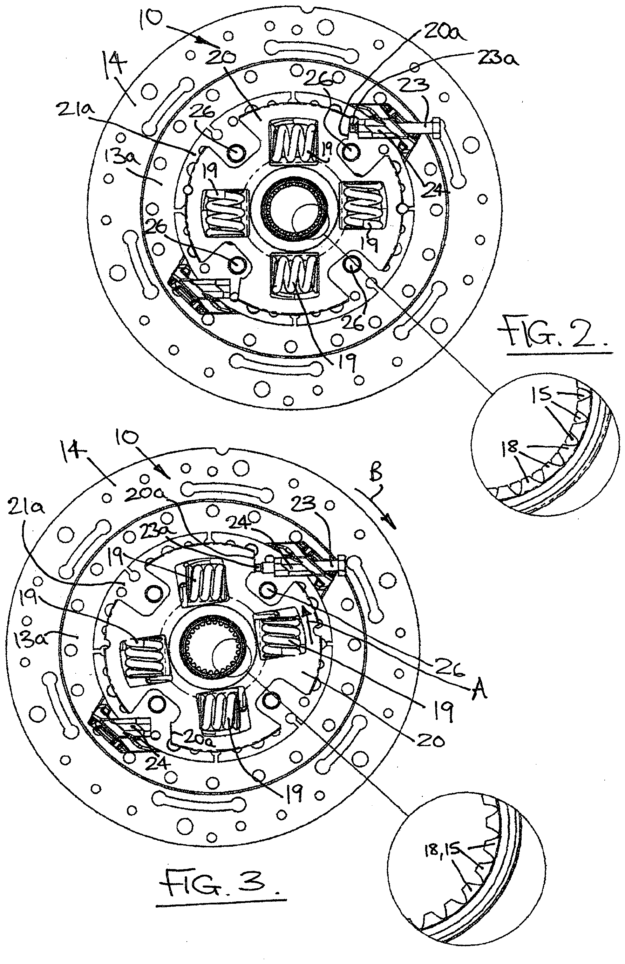

A spring means, in the form of circumferentially acting coil springs 19 acts between the two hubs for generating a rotational torque bias between the two hubs about their co-axial axis. In the arrangement shown one end of each spring acts on a central flange 20 formed integrally with secondary hub 17 and the other end of each spring acts on spaced plates 21a and 21b. Plate 21a is connected with hub flange 13a via spacers 25 and rivets 22 and plate 21b is connected with plate 21a via rivets 26. Thus springs 19 bias the hubs 13 and 17 rotational relative to each other so that their splines connections 15 and 18 are not circumferentially aligned as shown in the enlarged circled portion of Figure 2. Thus with the two hubs in this circumferential position the hubs cannot both be mounted on the drive shaft splines 16.

Setting means in the form of bolts 23 (only one of which is shown in position in Figures 2 and 3) are mounted in blocks 24 mounted between the plate 21a and the flange 13a. The bolts 23 are supported by blocks 24 between plates 21a and 21b so that ends 23a of bolts 23 act on surfaces 20a of central flange 20. By turning bolts 23 the hub17 can be rotated relative to hub 13 in the direction of arrow A of Figure 3, which is opposite to the intended drive direction shown by arrow B. This rotation of bolts 23 increases the rotation bias between the two hubs, until the splines of the two hubs are aligned as shown in the enlarged circled portion of Figure 3. With the two hub splines aligned the hubs can both be slid onto the drive shaft splines 16.

By way of example, in one application of the coupling the bolts 23 were designed to rotate the hubs through an angle of 7.5 degrees to align the hub splines to give a rotational torque bias from springs 19 of 150 Nm.

With both hubs mounted on the drive shaft splines the setting bolts 23 can then be wound in the opposite direction to allow the spring means to bias the hubs rotationally away from each other so that the first spline connection 15 has its tooth flanks 15a in driving contact with the tooth flanks 16a of the drive shaft splines 16. This contact is maintained throughout the operation of the coupling, thus eliminating spline rattle, unless an overrunning torque in excess of the bias torque (e.g. 150 Nm in the example quoted) is transmitted through the drive shaft 12.

Such a coupling arrangement, by maintaining drive transmitting contact between the tooth flanks 15a and 16a under normal driving conditions, even during normal overrunning conditions, eliminates spline rattle in the connection between the primary hub splines 15 and the splines 16 of the drive shaft.

Although two bolts are shown a diametrically opposite positions in the illustrated example, three or more bolts could be used at spaced circumferential locations around the coupling.

In the example quoted the torque provided by the spring means 19 is 150 Nm which is chosen to exceed the normal maximum torque expected to be transmitted by the drive shaft even on overrun so that the tooth flanks 15a and 16a remain in contact at all times.

## Claims

1. A vehicle driveline coupling (10) for coupling a driveline component (11) to a splined drive shaft (12), the coupling comprising:-
a primary hub (13) connected for co-rotation with the driveline component and having a first spline connection (15) for engaging splines (16) on the drive shaft;
a secondary hub (17) mounted co-axially with the primary hub and having a second spline connection (18) for engaging the splines (16) on the drive shaft;
spring means (19) for generating a rotational torque bias between the two hubs about their co-axial axis so that the two spline connections (15,18) are not aligned and cannot initially both be mounted on the drive shaft splines (16), the coupling being **characterised in that** setting means (20a,23,24) are provided acting between the hubs (13,17) to rotate the hubs relative to each other against the torque bias to increase the bias and align the spline connections to allow both hubs (13,17) to be mounted on the drive shaft splines (16), release of the setting means (20a,23,24) after the hubs are both mounted on the drive shaft splines (16) allowing the spring means (19) to bias the hubs rotationally away from each other so that the first spline connection (15) is in drive transmitting contact with the drive shaft splines (16) and this contact is maintained, thus eliminating spline rattle, unless an overrunning torque in excess of the bias torque is transmitted through the drive shaft (12).

2. A coupling according to claim 1 **characterised in that** a drive disc (14) provides the connection between the primary hub (13) and the driveline component.(11) .

3. A coupling according to claim 1 or 2 **characterised in that** the spring means comprises circumferentially acting coil springs (19) which act between a central flange (20) connected with one hub (17) and a pair of outer spaced plates (21a,21b) connected with the other hub (13).

4. A coupling according to any one of claims 1 to 3 **characterised in that** the setting means comprises a bolt (23) in screw-threaded engagement with a component (24) connected with one hub (13), the bolt (23) engaging a formation (20a) connected with the other hub (17) so that rotation of the bolt (23) within the component (24) rotates the one hub (13) relative to the other hub (17) to align the hub spline connections (15,18) and increase the torque bias.

5. A coupling according to claim 4 **Characterised in that** a plurality of bolts (23) are provided a circumferentially spaced locations around the hubs (13,17).

6. A coupling according to any one of claims 1 to 5 **characterised in that** the rotational torque applied by the spring means (19) exceeds the normal maximum torque expected to be transmitted by the drive shaft (12).

## Patentansprüche

1. Kupplung (10) im Antriebsstrang eines Fahrzeugs zum Kuppeln einer Antriebsstrang-Komponente (11) mit einer verzahnten Antriebswelle (12), wobei die Kupplung umfasst:
eine Primärnabe (13), die mit der Antriebsstrang-Komponente zum Gleichlauf verbunden ist und eine erste Verzahnungsverbindung (15) zum Eingriff mit Zähnen (16) auf der Antriebswelle aufweist; eine Sekundärnabe (17), die koaxial zur Primärnabe montiert ist und eine zweite Verzahnungsverbindung (18) zum Eingriff mit den Zähnen (16) auf der Antriebswelle aufweist; Federmittel (19) zum Erzeugen einer Drehmomentvorspannung zwischen den beiden Naben um ihre koaxiale Achse, so dass die beiden Verzahnungsverbindungen (15, 18) nicht ausgerichtet sind und zunächst nicht beide an den Antriebswellenverzahnungen (16) angebracht werden können, wobei die Kupplung **dadurch gekennzeichnet ist, dass** Einstellmittel (20a, 23, 24) so vorgesehen sind, dass sie zwischen den Naben (13, 17) wirken, um die Naben relativ zueinander gegen die Drehmomentvorspannung zu drehen und so die Vorspannung zu erhöhen und die Verzahnungsverbindungen auszurichten, damit beide Naben (13, 17) auf den Antriebswellenverzahnungen (16) montiert werden können, wobei ein Lösen der Einstellmittel (20a, 23, 24), nachdem die Naben beide an den Antriebswellenverzahnungen (16) angebracht sind, es den Federmitteln (19) ermöglicht, die Naben drehbar voneinander weg vorzuspannen, so dass die erste Verzahnungsverbindung (15) in Antriebsübertragungskontakt mit den Antriebswellenverzahnungen (16) steht und dieser Kontakt aufrechterhalten wird, wodurch ein Rasseln der Verzahnungen verhindert wird, es sei denn, ein über das Vorspannmoment hinausgehendes Drehmoment wird durch die Antriebswelle (12) übertragen.

2. Kupplung nach Anspruch 1, **dadurch gekennzeichnet, dass** die Antriebsscheibe (14) die Verbindung zwischen der Primärnabe (13) und der Antriebsstrang-Komponente (11) vorsieht.

3. Kupplung nach Anspruch 1 oder 2, **dadurch gekennzeichnet, dass** das Federmittel umfangsmäßig wirkende Schraubenfedern (19) umfasst, die zwischen einem zentralen Flansch (20), der mit der einen Nabe (17) verbunden ist, und einem Paar von äußeren beabstandeten Platten (21a, 11b), die mit der anderen Nabe (13) verbunden sind, wirken.

4. Kupplung nach einem der Ansprüche 1 bis 3, **dadurch gekennzeichnet, dass** das Einstellmittel einen Bolzen (23) in Schraubgewindeeingriff mit einer Komponente (24) umfasst, die mit der einen Nabe (13) verbunden ist, wobei der Bolzen (23) in eine Formation (20a) eingreift, die mit der anderen Nabe (17) so verbunden ist, dass die Drehung des Bolzens (23) innerhalb der Komponente (24) die eine Nabe (13) relativ zu der anderen Nabe (17) dreht, um die Nabenverzahnungsverbindungen (15, 18) auszurichten und die Drehmomentvorspannung zu erhöhen.

5. Kupplung nach Anspruch 4, **dadurch gekennzeichnet, dass** eine Mehrzahl von Bolzen (23) an in Umfangsrichtung beabstandeten Stellen um die Naben (13, 17) herum vorgesehen ist.

6. Kupplung nach einem der Ansprüche 1 bis 5, **dadurch gekennzeichnet, dass** das vom Federmittel (19) aufgebrachte Drehmoment das normale maximale Drehmoment übersteigt, das erwartungsgemäß von der Antriebswelle (12) übertragen wird.

## Revendications

1. Dispositif d'accouplement de transmission de véhicule (10) pour coupler un composant de transmission (11) à un arbre d'entraînement cannelé (12), le dispositif d'accouplement comprenant :
un moyeu principal (13) raccordé pour tourner conjointement avec le composant de transmission et ayant un premier raccordement de cannelure (15) pour mettre en prise des cannelures (16) sur l'arbre d'entraînement ;
un moyeu secondaire (17) monté de manière coaxiale avec le moyeu principal et ayant un second raccordement de cannelure (18) pour mettre en prise les cannelures (16) sur l'arbre d'entraînement ; des moyens de rappel (19) pour générer une sollicitation de couple de rotation entre les deux moyeux autour de leur axe coaxial de sorte que les deux raccordements de cannelure (15, 18) ne sont pas alignés et ne peuvent pas être initialement montés sur les cannelures d'arbre d'entraînement (16), le dispositif d'accouplement étant **caractérisé en ce que** des moyens de réglage (20a, 23, 24) sont prévus pour agir entre les moyeux (13, 17) afin de faire tourner les moyeux l'un par rapport à l'autre contre la sollicitation de couple afin d'augmenter la sollicitation et d'aligner les raccordements de cannelure pour permettre aux deux moyeux (13, 17) d'être montés sur les cannelures d'arbre d'entraînement (16), libérer les moyens de réglage (20a, 23, 24) après que les moyeux ont tous deux été montés sur les cannelures d'arbre d'entraînement (16) permettant aux moyens de rappel (19) de solliciter les moyeux en rotation à distance l'un de l'autre de sorte que le premier raccordement de cannelure (15) est en contact de transmission d'entraînement avec les cannelures d'arbre d'entraînement (16) et ce contact est maintenu, éliminant ainsi le cliquetis des cannelures, à moins qu'un couple en excès du couple de sollicitation ne soit transmis par l'arbre d'entraînement (12).

2. Dispositif d'accouplement selon la revendication 1, **caractérisé en ce qu'**un disque d'entraînement (14) fournit le raccordement entre le moyeu principal (13) et le composant de transmission (11).

3. Dispositif d'accouplement selon la revendication 1 ou 2, **caractérisé en ce que** les moyens de rappel comprennent des ressorts hélicoïdaux (19) agissant de manière circonférentielle, qui agissent entre une bride centrale (20) raccordée avec un moyeu (17) et une paire de plaques externes espacées (21a, 21b) raccordées avec l'autre moyeu (13).

4. Dispositif d'accouplement selon l'une quelconque des revendications 1 à 3, **caractérisé en ce que** les moyens de réglage comprennent un boulon (23) en mise en prise filetée avec un composant (24) raccordé avec un moyeu (13), le boulon (23) mettant en prise une formation (20a) raccordée avec l'autre moyeu (17) de sorte que la rotation du boulon (23) à l'intérieur du composant (24) fait tourner le premier moyeu (13) par rapport à l'autre moyeu (17) afin d'aligner les raccordements de cannelure de moyeu (15, 18) et d'augmenter la sollicitation de couple.

5. Dispositif d'accouplement selon la revendication 4, **caractérisé en ce qu'**une pluralité de boulons (23) sont prévus à des emplacements circonférentiellement espacés autour des moyeux (13, 17).

6. Dispositif d'accouplement selon l'une quelconque des revendications 1 à 5, **caractérisé en ce que** le couple de rotation appliqué par les moyens de rappel (19) dépasse le couple maximum normal à transmettre par l'arbre d'entraînement (12).
